(19) Europäisches Patentamt

European Patent Office

Office européen des brevets

(11) EP 2 045 801 B1

(12) **EUROPEAN PATENT SPECIFICATION**

(45) Date of publication and mention
of the grant of the patent:
**11.08.2010 Bulletin 2010/32**

(51) Int Cl.:
*G10L 21/02* (2006.01)      *H04M 9/08* (2006.01)

(21) Application number: **07019281.0**

(22) Date of filing: **01.10.2007**

(54) **Efficient audio signal processing in the sub-band regime, method, system and associated computer program**

Effiziente Audiosignalverarbeitung im Subbandbereich, Verfahren, Vorrichtung und dazugehöriges Computerprogramm

Traitement de signal audio efficace dans le régime de sous-bande, méthode, système et programme d'ordinateur associé

(84) Designated Contracting States:
**AT BE BG CH CY CZ DE DK EE ES FI FR GB GR
HU IE IS IT LI LT LU LV MC MT NL PL PT RO SE
SI SK TR**

(43) Date of publication of application:
**08.04.2009 Bulletin 2009/15**

(73) Proprietor: **Harman Becker Automotive Systems
GmbH
76307 Karlsbad (DE)**

(72) Inventors:
• **Schmidt, Gerhard
89081 Ulm (DE)**
• **Köpf, Hans-Jörg
73340 Amstetten (DE)**
• **Wirsching, Günther
85072 Eichstätt (DE)**

(74) Representative: **Grünecker, Kinkeldey,
Stockmair & Schwanhäusser
Anwaltssozietät
Leopoldstrasse 4
80802 München (DE)**

(56) References cited:
**GB-A- 2 426 167      US-A- 5 272 695**

• GAY S L ET AL: "Fast converging subband acoustic echo cancellation using RAP on the WE DSP16A" 3 April 1990 (1990-04-03), ICASSP, INTERNATIONAL CONFERENCE ON ACOUSTICS, SPEECH AND SIGNAL PROCESSING, PAGE(S) 1141-1144 , XP010641486 * abstract * * figure 1 * * page 1141, right-hand column, paragraph 1 *
• XIAOJIAN LU ET AL: "Acoustic echo cancellation with post-filtering in subband" APPLICATIONS OF SIGNAL PROCESSING TO AUDIO AND ACOUSTICS, 2003 IEEE WORKSHOP ON. NEW PALTZ, NY, USA OCT,. 19-22, 2003, PISCATAWAY, NJ, USA,IEEE, 19 October 2003 (2003-10-19), pages 29-32, XP010696434 ISBN: 0-7803-7850-4

## Description

### Field of Invention

The present invention relates to audio signal processing and, in particular, to efficient echo compensation of a speech signal in the sub-band regime.

### Background of the invention

Audio signal processing in large part concerns the enhancement of signals with respect to noise and echoes. Speech signal processing has often to be performed in a noisy background environment. A prominent example is hands-free voice communication in vehicles. Hands-free telephones provide a comfortable and safe communication systems of particular use in motor vehicles. In the case of hands-free telephones it is mandatory to suppress noise in order to guarantee the communication. The amplitudes and frequencies of the noise signals are temporally variable due to, for example, the speed of the vehicle and road noises.

Of particular importance is the suppression of signals of the remote subscriber which are emitted by the loudspeakers and therefore received again by the microphone(s), since otherwise unpleasant echoes can severely affect the quality and intelligibility of voice conversation. In the worst case, the acoustic feedback can even lead to a complete breakdown of communication, if the acoustic echoes are not significantly attenuated or substantially removed.

Echo suppression is particularly difficult, if the speaker using a microphone for communication with a remote communication party is moving as, e.g., a driver using a hands-free set who steers a wheel while communicating with a remote party by the hands-free telephone set. In this case, the impulse response of the loudspeaker-room-microphone (LRM) system is time-variant. Usually residual echoes are still present in the processed audio signals to be provided to a remote communication party. These residual echoes, e.g., result in so-called echo blips in hands-free telephone systems thereby deteriorating the microphone signal significantly, in particular, due to the huge delay of current mobile phone connections.

Several methods for echo compensation have been proposed and implemented in communication systems in recent years. Adaptive filters are employed for echo compensation of acoustic signals (see, e.g., E. Hänsler and G. t, "Acoustic Echo and Noise Control - A Practical Approach", John Wiley & Sons, New York, 2004) that are used to model the transfer function of the LRM system by means of an adaptive finite impulse response (FIR) filter.

GB -A- 2 426 167 discloses a method for a quantile based noise estimation wherein the noise power for each frequency bin is determined using the noisy signal power from T adjacent timeframes. In particular, the power spectra of a noisy signal are ordered in a series of increasing magnitude and a noise estimate is calculated as the corresponding quantile. The noise estimate can be used for noise reduction and in order to save computational costs a subset of odd or even frequencies of sub-bands is updated for the noise estimate for a particular timeframe and the noise estimates for the remaining frequencies can be derived by interpolation of the updated subset of values.

Steven L. Gay et al., in a paper entitled « Fast converging subband acoustic echo cancellation using RAP on the WE® DSP16A", 3 April 1990, ICASSP, International Conference on Acoustics, Speech and Signal Processing, pages 1141-1144, describe acoustic echo cancellation in the sub-band regime. In particular, only a particular number of sub-bands is used for the signal processing, since complex conjugates need not to be considered.

Lu Xiaojian et al., in paper entitled « Acoustic echo cancellation with post-filtering in subband", Workshop on Applications of Signal Processing to Audio and Acoustics, 2003, IEEE, October 29-22, 2003, New Platz, NY, USA, (2003-10-19), pages 29-32, describe echo cancellation with post-filtering and, in particular, processing of only K/2 -1 sub-bands for acoustic echo cancellation, where K is the number of sub-bands into which the microphone signal is divided.

In present echo compensation processing an adaptive filter is used to model the impulse response of the LRM system to generate an estimate for the echo signal that can be subtracted from the microphone signal. The adaptation of the echo compensation filtering means is usually carried out by the normalized least mean square (NLMS) algorithm.

In order to contain the need for high-performance computational means to a reasonable level, the signal processing is usually performed in a down-sampled sub-band regime in which the computational complexity, in principle, can be reduced as compared to the full-band processing.

The higher the down-sampling rate of the sub-band signals that are processed for echo compensation is selected the more the computation costs can be reduced. However, in the art the choice of an appropriate down-sampling factor is generally limited by the known problem of aliasing. Hann windows or other filters chosen show different aliasing characteristics. Artifacts increase with increasing down-sampling rate and, moreover, the echo damping rate is insufficient when the down-sampling rate exceeds some threshold.

Moreover, the frequency response of a Hann window is characterized by a significant overlap of sub-bands and, thus, adjacent pitch trajectories are sometimes hard to separate which is crucial for speech enhancement. The noise reduction in frequency ranges adjacent to a frequency ranges that are dominated by a wanted signal, e.g., are not sufficiently damped. In order to reduce the overlap the order of the DFT might be increased (e.g., from a standard of N = 256 to N = 512 nodes of the Fourier transform). The corresponding increase of the frequency resolution results, however, in a decrease in time resolution of the processed audio signal.

This may give raise to severe problems, since, e.g., the standards of the International Telecommunication Union and the European Telecommunication Standards Institute have to be met by any actual telephone equipment. For a sampling frequency of 11025 Hz, N = 512 results in a time delay that is not tolerable according to the above mentioned standards.

Therefore, despite the recent developments and improvements, effective echo compensation and noise reduction in speech signal processing proves still to be a major challenge. It is therefore the problem underlying the present invention to overcome the above-mentioned drawbacks and to provide a system and a method for audio signal processing, in particular, suitable for hands-free telecommunication system showing a more efficient processing for enhancing the quality of an audio signal, in particular, a speech signal.

## Description of the Invention

The above-mentioned problem is solved by the method for audio signal processing, in particular, speech signal processing according to claim 1, the method comprising the steps of

dividing a microphone signal ($y(n)$) into microphone sub-band signals $y_{sb}(n)$;

excising a predetermined number of the microphone sub-band signals $y_{sb}(n)$ for predetermined sub-bands; wherein the predetermined number of sub-bands consists of sub-bands with an odd index or an even index

processing the remaining microphone sub-band signals ($_{Ysb,g}(n)$), i.e. the microphone sub-band signals that are not excised in the preceding step, to obtain enhanced microphone sub-band signals ($\hat{s}_{sb,g}(n)$); and

reconstructing microphone sub-band signals for the predetermined sub-bands for which microphone sub-band signals were excised, wherein each of the excised microphone sub-band signals is reconstructed by means of enhanced microphone sub-band signals ($\hat{s}_{sb,g}(n)$) obtained by processing the remaining microphone sub-band signals ($y_{sb,g}(n)$).

According to the disclosed method only part of the microphone sub-band signals that are obtained by a filter bank comprising high-pass, band pass and low-pass filters are processed for quality enhancement, e.g., noise reduction and echo compensation which are expensive processing operations. Half of the microphone sub-band signals are excised, e.g., all microphone sub-band signals for sub-bands with an even or an odd index. Therefore, the overall computational load, memory demand as well as computational time, can be reduced as compared to the art. Moreover, the disclosed method does not increase the cost of manufacture.

Besides excising microphone sub-band signals for alternating indices, microphone sub-band signals above or below a predetermined frequency threshold may be excised. In particular, microphone sub-band signals with alternating indices may be excised for a frequency range of the sub-band signals above or below a predetermined frequency threshold only. For instance, one might consider applying the above described method (comprising excising a predetermined number of microphone sub-band signals) only for a high frequency range (e.g., above some kHz, above 1 kHz, 1.5 kHz or 2 kHz) and using conventional signal processing for all of the obtained microphone sub-band signals in a low frequency range. Thereby, a variety of compromises between saving computational costs and achieving the best signal quality possible can be achieved.

It is expressly noted that the processing of the remaining microphone sub-band signals ($y_{sb,g}(n)$) to obtain the enhanced microphone sub-band signals ($\hat{s}_{sb,g}(n)$) can comprise echo compensating of the remaining microphone sub-band signals ($y_{sb,g}(n)$) and/or noise reduction of the remaining microphone sub-band signals ($y_{sb,g}(n)$). In particular, the expensive process of echo compensation benefits from excising a predetermined number of microphone sub-band signals.

Echo compensated microphone sub-band signals can be advantageously further processed for noise reduction. Moreover, the microphone sub-band signals might be de-correlated by a time-invariant de-correlation filtering means (e.g., of the first or second order) or by an adaptive de-correlation means as known in the art in order to improve the convergence speed of the adaptation process of the filter coefficients of the employed echo compensation filtering means.

The remaining microphone sub-band signals ($y_{sb,g}(n)$) can be echo compensated by steps comprising

dividing a reference signal $x(n)$ into reference sub-band signals $x_{sb}(n)$;

excising a predetermined number of the reference sub-band signals $x_{sb}(n)$ that is equal to the predetermined number of excised microphone sub-band signals for the same predetermined sub-bands;

adapting filter coefficients of an echo compensating filtering means based on the remaining reference sub-band signals $x_{sb,g}(n)$ (and sub-band error signals); and

filtering the remaining microphone sub-band signals ($y_{sb,g}(n)$) by means of the adapted filter coefficients for reducing echo contributions to the remaining microphone sub-band signals ($y_{sb,g}(n)$) (i.e. subtracting estimated echo contributions from the remaining microphone sub-band signals ($y_{sb,g}(n)$).

The reference signal $x(n)$ is a signal received by a near party and input in a loudspeaker of a loudspeaker-room system. In particular, the reference signal represents a verbal utterance of the remote party and transmitted to the near party, e.g., by radio transmission.

An analysis filter bank for obtaining the reference sub-band signals $x_{sb}(n)$ might be used that is similar to the one used for dividing the microphone signal ($y(n)$) into microphone sub-band signals $y_{sb}(n)$. Both filter banks may comprise Hann or Hamming windows. When adapting the employed echo compensating means it is highly efficient to only consider reference sub-band signals for sub-bands that are remained for the microphone sub-band signals. If microphone sub-band signals with even sub-band indices are maintained (not excised), reference sub-band signals with the same even sub-band indices are maintained for adaptation of the echo compensating means, for example.

The microphone sub-band signals ($y_{sb}(n)$) and the reference sub-band signals ($x_{sb,g}(n)$) may be down-sampled with respect to the microphone signal ($y(n)$) and the reference signal ($x(n)$), respectively, by the same down-sampling factor ($r$). If, e.g., a Hann window is used for the analysis filter banks the length of the analysis filters has to be equal to the number of sub-bands M and a down-sampling factor of $r = M / 4$ is suitable. In fact, the set of reconstructed microphone sub-band signals for the predetermined sub-bands for which microphone sub-band signals were excised and the enhanced microphone sub-band signals ($\hat{s}_{sb,g}(n)$) are synthesized by a synthesis filter bank similar to the analysis filter bank used to divide the microphone signal into the microphone sub-band signals.

For a typical processing of the analysis and the synthesis filter bank by Discrete Fourier Transformation (DFT), for example, the lengths of the analysis and the synthesis filter banks are the same and equal to the number of sub-bands M. A down-sampling factor of $r = M / 4$, in principle, allows for perfect re-synthesis of the microphone sub-band signals.

By down-sampling the microphone sub-band signals with respect to the microphone signal detected by a microphone (sampling rate about 8 kHz, for example) the computational load is significantly reduced as known in the art.

According to a relatively simple embodiment of the inventive method at least at one time ($n$) the microphone sub-band signals for the predetermined sub-bands for which microphone sub-band signals were excised are reconstructed for the predetermined sub-bands by averaging the remaining microphone sub-band signals that are adjacent in time ($n + k$, $n - k$), where n is the discrete time index and k is an integer, $k \geq 1$; k = 1, 2, ... Thus, by the term "adjacent" not only the closest adjacent signals (in time) are meant but also some finite number of neighbors can be included. For example, a reconstructed microphone sub-band signal at frequency bin j may be calculated by averaging enhanced (e.g., echo compensated) remained microphone sub-band signals at frequency bins j + 1 and j - 1. Averaging may include different weights (interpolation matrices) for the microphone sub-band signals at times n + 1, n and n - 1 (and further adjacent values, when used).

Such averaging is relatively straightforward and may be performed only in frequency regimes or for time frames where the inventive method has been applied. If a predetermined number of microphone sub-band signals is excised all over the set of sub-bands ($\mu = 1, .., M$) averaging may be performed also all over the entire range of sub-bands. On the other hand, it may be preferred to reconstruct a part of the excised microphone sub-band signals only. In principle, reconstruction can be variably performed according to the actual application. As already mentioned above one might prefer to apply the herein disclosed method only to relatively high-frequency sub-bands. In this case averaging is only necessary in order to reconstruct microphone sub-band signals for the predetermined sub-bands for which microphone sub-band signals were excised in the high-frequency sub-band range.

According to a more elaborated embodiment interpolation is performed based on both adjacent and the maintained microphone sub-band signals at the time n at which microphone sub-band signals shall be reconstructed. In particular, the excised microphone sub-band signals at time n can be reconstructed by interpolation of remaining microphone sub-band signals at the time n and remaining microphone sub-band signals adjacent in time (one or more previous signal vector and subsequent signal vector). Accurate reconstruction with tolerable artifacts can thereby be achieved. Details are given in the detailed description below.

In order to guarantee a significant reduction of the need for computational resources it may be preferred that the above-mentioned interpolation is performed by interpolation matrices which are approximated by their main diagonals and secondary diagonals, respectively (for further details, see again description below).

The present invention also provides a computer program product, according to claim 9, comprising one or more computer readable media having computer-executable instructions for performing the steps of one of the above examples of the herein disclosed method for audio signal processing.

Furthermore, it is provided a signal processing means, according to claim 10, comprising

at least one microphone configured to obtain at least one microphone signal ($y(n)$);

an analysis filter bank configured to divide the at least one microphone signal ($y(n)$) into microphone sub-band signals $y_{sb}(n)$;

a first filtering means configured to excise a predetermined number of the microphone sub-band signals $y_{sb}(n)$ for predetermined sub-bands; wherein the predetermined number of sub-bands consists of sub-bands with an odd index or an even index

a second filtering means configured to process the remaining microphone sub-band signals ($y_{sb,g}(n)$), i.e. the microphone sub-band signals that are not excised in the preceding step, to obtain enhanced microphone sub-band signals ($\hat{s}_{sb,g}(n)$);

processing means configured to reconstruct microphone sub-band signals for the predetermined sub-bands for which microphone sub-band signals were excised, wherein each of the excised microphone sub-band signals is reconstructed by means of enhanced microphone sub-band signals ($\hat{s}_{sb,g}(n)$) obtained by processing the remaining microphone sub-band signals ($y_{sb,g}(n)$); and

a synthesis filter bank configured to synthesize the reconstructed and enhanced microphone sub-band signals ($\hat{s}_{sb}(n)$) obtained from the remaining microphone sub-band signals ($y_{sb,g}(n)$) to obtain an enhanced microphone signal.

The set of reconstructed and enhanced microphone sub-band signals ($\hat{s}_{sb}(n)$) is obtained from (and include the) enhanced microphone sub-band signals ($\hat{s}_{sb,g}(n)$) obtained from the remaining microphone sub-band signals ($y_{sb,g}(n)$); see detailed description below.

As described above particular sub-bands (microphone sub-band signals of particular sub-bands) might be excised (odd or even ones) all over the entire sub-band range or for a particular range (e.g., a high-frequency range) only. The first filtering means can be part of the analysis filter bank.

In the signal processing means the second filtering means may, in particular, be an echo compensation filtering means; and the signal processing means may further comprise

an analysis bank configured to divide a reference signal into reference sub-band signals $x_{sb}(n)$;

a third filtering means (e.g., being integrated in the analysis filter bank) configured to excise a predetermined number of the reference sub-band signals $x_{sb}(n)$ that is equal to the predetermined number of excised microphone sub-band signals for the same predetermined sub-bands; and in addition

the echo compensation filtering means may be configured to be adapted based on the remaining reference sub-band signals $x_{sb,g}(n)$ (i.e. the filter coefficients of the adaptable echo compensation filtering means are adapted); and

to filter the remaining microphone sub-band signals ($y_{sb,g}(n)$) by means of adapted filter coefficients.

The analysis filter banks (for dividing the microphone and reference signals into sub-band signals) are, in particular, configured to down-sample the sub-band signals by a factor r. The synthesis filter bank is, in particular, configured to up-sample the down-sampled reconstructed and enhanced microphone sub-band signals ($\hat{s}_{sb,g}(n)$) by the same factor as the down-sampling factor r.

According to an example of the signal processing means, the processing means is configured to reconstruct microphone sub-band signals for the predetermined sub-bands for which microphone sub-band signals were excised (excised microphone sub-band signals) at a particular time (n) by interpolation of remaining microphone sub-band signals at the particular time (n) and remaining microphone sub-band signals adjacent in time (directly adjacent or at some time $n \pm 1$, and/or $n \pm 2$, etc.).

Furthermore, the herein disclosed signal processing means according may further comprise a post-filtering means configured to filter the enhanced microphone sub-band signals ($y_{sb,g}(n)$) in order to reduce background noise and/or residual echoes. The post-filtering means can be an adaptive noise reduction filter as known in the art, in particular, a Wiener filter.

The signal processing means according to one of the examples above is particularly useful for hands-free communication. Moreover, speech recognition can be improved by the herein disclosed speech signal processing. Thus, it is provided a hands-free telephone set or a speech recognition means comprising a signal processing means according to one of the examples described above.

Additional features and advantages of the present invention will be described with reference to the drawings. In the description, reference is made to the accompanying figures that are meant to illustrate preferred embodiments of the invention. It is understood that such embodiments do not represent the full scope of the invention.

Figure 1 is a flow chart illustrating basic steps of the inventive method for signal processing comprising the steps of excising a number of microphone sub-band signals before processing for enhancing the quality of the microphone signal and subsequently reconstructing the excised microphone sub-band signals.

Figure 2 illustrates an example for a realization of the herein disclosed method for signal processing including an echo compensation filter and a post-filtering means for noise reduction.

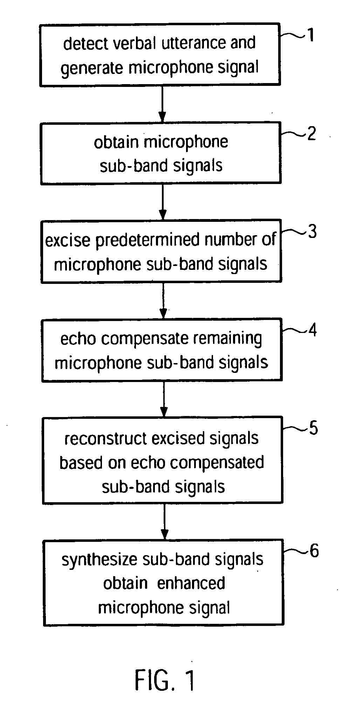

In Figure 1 basic steps of the herein disclosed method for signal processing in the sub-band regime are shown. A speech signal representing an utterance by a local speaker is detected by a microphone that generates a microphone signal 1. The microphone signal is filtered by an analysis filter bank 2 comprising low-pass, band pass and high-pass filters in order to obtain microphone sub-band signals. These microphone sub-band signals are subsequently further processed for enhancing the quality, e.g., by echo compensation, dereverberation and/or noise reduction.

The speech signal might be detected by a microphone array to obtain a number of microphone signals that might by processed by beamforming. In this case, the signal processing described in the following can be applied to each of the microphone signals obtained by the microphones of the microphone array.

It is noted that the analysis filter bank can be any one known in the art, e.g., a Discrete Fourier Transformation (DFT) or Discrete Cosine Transformation (DCT) filter or a Fast Fourier Transformation (FFT) filter. However, according to the present invention not all M microphone sub-band signals are used for the further processing, where M is the order of a DFT, DCT or FFT, for example, or the channel number of the analysis filter bank, in general. Thus, after the filtering of the microphone signal by the analysis filter bank 2 a predetermined number of microphone sub-band signals is excised 3. For instance, all microphone sub-band signals $y_\mu$ with an odd index might be excised and only microphone sub-band signals $y_\mu$ with an even index $\mu \in \{0, 2, 4,..., M - 2\}$ may be maintained (resulting in reducing the memory demand by half) and processed, e.g., for echo compensation 4.

Then, the previously excised sub-band signals (signal for sub-bands with an odd index, for instance, if microphone sub-band signals has been previously excised for such indices) are reconstructed 5 based on the echo compensated microphone sub-band signals. An enhanced microphone signal is eventually obtained by synthesizing 6 both the echo compensated sub-band signals and the reconstructed sub-band signals.

In the following the process of the reconstruction of the previously excised sub-band signals is described or the case that the signals for odd sub-bands are excised (resulting in half of the memory demand). For example, a windowed DFT is used for sub-band filtering by an analysis filter bank. Further, reconstruction is based on one previous and one following sub-band vector for exemplary purposes only. From the vector of the microphone signal y(n), where n is the discrete time index, a vector of some length M + 2r (r denotes the factor of down-sampling of the sub-band signals) is extracted

$$ \mathbf{y}(n) = \left[ y(n+r), y(n+r-1),..., y(n-M-r+1) \right]^T $$

where the upper index T denotes the transposition operation. Windowing is performed by

$$ \mathbf{F} = \begin{bmatrix} g_0 & 0 & 0 & \cdots & 0 \\ 0 & g_1 & 0 & \cdots & 0 \\ 0 & 0 & g_2 & \cdots & 0 \\ \vdots & \vdots & \vdots & \ddots & \vdots \\ 0 & 0 & 0 & \cdots & g_{M-1} \end{bmatrix} $$

where the diagonal coefficients $g_0$, .., $g_{M-1}$, are the coefficients of the $0^{th}$ prototype filter (see also below), e.g., a Hann window, of the analysis filter bank that is given by

$$ \mathbf{g}_{\mu,ana} = \left[ g_{\mu,0,ana}, g_{\mu,1,ana},..., g_{\mu,N_{ana}-1,ana} \right]^T . $$

The analysis filter banks may operate in the frequency ($\Omega$) domain and the ideal frequency response of a prototype low-pass filter may be given by

$$ G_{0,ana,ideal}\left(e^{j\Omega}\right) = \begin{cases} 1, \text{ for } |\Omega| \leq \dfrac{2\pi}{M}, \\ \text{any, for } \dfrac{2\pi}{M} < |\Omega| < \dfrac{2\pi}{r}, \\ 0, \text{ for } |\Omega| \geq \dfrac{2\pi}{r} \end{cases} $$

The other filters (sub-band index $\mu = 1, .., M-1$) can be obtained by frequency shifting as known to the skilled person (for details see, e.g., E. Hänsler and G. Schmidt, "Acoustic Echo and Noise Control - A Practical Approach", John Wiley & Sons, New York, 2004).

After supplementation of the window matrix $\mathbf{F}$ with M x r zeros (zero padding) on the left-hand and right-hand sides $\mathbf{F}_0 = [0_{M \times r} \ \mathbf{F} \ 0_{M \times r}]$ a windowed signal portion of the length M can be obtained by $\mathbf{F}_0 \ \mathbf{y}(n)$.

After transformation, e.g., by a DFT, the actual sub-band vector (at time n) is obtained. The DFT can be formulated by the transformation matrix

$$\mathbf{T} = \begin{bmatrix} 1 & 1 & 1 & \cdots & 1 \\ 1 & e^{-j\frac{1}{M}2\pi} & e^{-j\frac{2}{M}2\pi} & \cdots & e^{-j\frac{M-1}{M}2\pi} \\ 1 & e^{-j\frac{2}{M}2\pi} & e^{-j\frac{4}{M}2\pi} & \cdots & e^{-j\frac{2(M-1)}{M}2\pi} \\ \vdots & \vdots & \vdots & \ddots & \vdots \\ 1 & e^{-j\frac{M-1}{M}2\pi} & e^{-j\frac{2(M-1)}{M}2\pi} & \cdots & e^{-j\frac{(M-1)(M-1)}{M}2\pi} \end{bmatrix}.$$

The sub-band signal shall be down-sampled by the factor r and, thus, the down-sampled sub-band signal at time n is obtained by

$$\mathbf{y}_{sb}(n) = \mathbf{T} \ \mathbf{F}_0 \ \mathbf{y}(nr).$$

By means of the respective window matrices for the previous (n-1) and subsequent (n+1) sub-band vectors

$$\mathbf{F}_{-1} = \begin{bmatrix} \mathbf{F} & 0_{M \times 2r} \end{bmatrix} \text{ and } \mathbf{F}_1 = \begin{bmatrix} 0_{M \times 2r} & \mathbf{F} \end{bmatrix}$$

the signal vectors

$$\mathbf{y}_{sb}(n-1) = \mathbf{T} \ \mathbf{F}_{-1} \ \mathbf{y}(nr) \text{ and } \mathbf{y}_{sb}(n+1) = \mathbf{T} \ \mathbf{F}_1 \ \mathbf{y}(nr)$$

are obtained. In order to extract odd sub-band vectors only the matrix

$$\mathbf{E}_u = \begin{bmatrix} 0 & 1 & 0 & 0 & 0 & 0 & \cdots & 0 & 0 \\ 0 & 0 & 0 & 1 & 0 & 0 & \cdots & 0 & 0 \\ 0 & 0 & 0 & 0 & 0 & 1 & \cdots & 0 & 0 \\ \vdots & \vdots & \vdots & \vdots & \vdots & \vdots & \ddots & \vdots & \vdots \\ 0 & 0 & 0 & 0 & 0 & 0 & \cdots & 0 & 1 \end{bmatrix}$$

is defined to obtain sub-bands for odd sub-band indices

$$\mathbf{y}_{sb,u}(n) = \mathbf{E}_u \, \mathbf{y}_{tb}(n) = \mathbf{E}_u \, \mathbf{T} \, \mathbf{F}_0 \, \mathbf{y}(nr) \, .$$

Similarly extraction of sub-band signals with even indices results from

$$\mathbf{y}_{sb,g}(n-i) = \mathbf{E}_g \, \mathbf{y}_{sb}(n-i) = \mathbf{E}_g \, \mathbf{T} \, \mathbf{F}_{-i} \, \mathbf{y}(nr) \, ; \, i = \pm 1,$$

with the extraction matrix

$$\mathbf{E}_g = \begin{bmatrix} 1 & 0 & 0 & 0 & 0 & 0 & \cdots & 0 & 0 \\ 0 & 0 & 1 & 0 & 0 & 0 & \cdots & 0 & 0 \\ 0 & 0 & 0 & 0 & 0 & 1 & \cdots & 0 & 0 \\ \vdots & \vdots & \vdots & \vdots & \vdots & \vdots & \ddots & \vdots & \vdots \\ 0 & 0 & 0 & 0 & 0 & 0 & \cdots & 1 & 0 \end{bmatrix}.$$

Reconstruction of the odd sub-band vectors is achieved by interpolation of even sub-band vectors. At time n a reconstructed odd sub-band vector $\hat{\mathbf{y}}_{sb,u}(n)$ is calculated from an actual (time is n) even sub-band signal vector $\mathbf{y}_{sb,g}(n)$ and a previous (time is n - 1) and a sub-sequent (time is n + 1) even sub-band vector

$$\hat{\mathbf{y}}_{sb,u}(n) = \mathbf{C}_1 \mathbf{y}_{sb,g}(n+1) + \mathbf{C}_0 \mathbf{y}_{sb,g}(n) + \mathbf{C}_{-1} \mathbf{y}_{sb,g}(n-1)$$

with the interpolation matrices $\mathbf{C}_1$, $\mathbf{C}_0$, $\mathbf{C}_{-1}$. In principle, averaging by more than two adjacent (in time) signal vectors can be performed, e.g.,

$$\hat{\mathbf{y}}_{sb,u}(n) = \mathbf{C}_2 \mathbf{y}_{sb,g}(n+2) + \mathbf{C}_1 \mathbf{y}_{sb,g}(n+1) + \mathbf{C}_{-1} \mathbf{y}_{sb,g}(n-1) + \mathbf{C}_{-2} \mathbf{y}_{sb,g}(n-2) \, .$$

With the above expression for sub-band signals with even indices one gets for the interpolation with $\mathbf{C}_1$, $\mathbf{C}_0$, and $\mathbf{C}_{-1}$:

$$\hat{\mathbf{y}}_{sb,u}(n) = \mathbf{C}_1 \mathbf{E}_g \, \mathbf{T} \, \mathbf{F}_1 \, \mathbf{y}(nr) + \mathbf{C}_0 \, \mathbf{E}_g \, \mathbf{T} \, \mathbf{F}_0 \, \mathbf{y}(nr) + \mathbf{C}_{-1} \mathbf{E}_g \, \mathbf{T} \, \mathbf{F}_{-1} \, \mathbf{y}(nr)$$

$$= \left[ \mathbf{C}_1 \mathbf{E}_g \, \mathbf{T} \, \mathbf{F}_1 + \mathbf{C}_0 \, \mathbf{E}_g \, \mathbf{T} \, \mathbf{F}_0 + \mathbf{C}_{-1} \mathbf{E}_g \, \mathbf{T} \, \mathbf{F}_{-1} \right] \mathbf{y}(nr)$$

This expression can concisely be represented by

$$\hat{y}_{sb,u}(n) = C_{ges}\, D_{E_g T}\, F_{ges}\, y(nr)$$

with $C_{ges} = [C_1\ C_0\ C_{-1}]$ and the block diagonal matrix

$$D_{E_g T} = \begin{bmatrix} E_g T & 0 & 0 \\ 0 & E_g T & 0 \\ 0 & 0 & E_g T \end{bmatrix}$$

and the total window matrix

$$F_{ges} = \begin{bmatrix} F_1 \\ F_0 \\ F_{-1} \end{bmatrix}.$$

In order to find an optimal reconstruction for the previously excised sub-band vector the $L_2$ - norm of the difference vector

$$\left\| y_{sb,u}(n) - \hat{y}_{sb,u}(n) \right\|_2,\ \text{i.e.,}\ \left\| E_u\, T\, F_0\, y(nr) - C_{ges}\, D_{E_g T}\, F_{ges}\, y(nr) \right\|_2$$

has to be minimized. The minimization can readily be achieved in a sufficiently good approximation by determining $C_{ges}$ such that each row of the matrix

$$E_u\, T\, F_0 - C_{ges}\, D_{E_g T}\, F_{ges}$$

has a minimal $L_2$ - norm. This can be achieved by means of the Moore-Penrose-pseudo inverse $(D_{E_g T}F_{ges})$ of the matrix $(D_{E_g T}F_{ges})$ Thus, $c_{ges}$ can be expressed by $(C_{ges} = E_u\, TF_0 D_{E_g T}F_{ges})$ Under the assumption that

$$\left( D_{E_g T}\, F_{ges} \right)\left( D_{E_g T}\, F_{ges} \right)^H$$

is invertable (where the upper index H denotes the Hemite conjugate, i. e. the adjoint matrix) the Moore-Penrose-pseudo inverse can be calculated from

$$\left( D_{E_g T}\, F_{ges} \right) = \left( D_{E_g T}\, F_{ges} \right)^H \left[ \left( D_{E_g T}\, F_{ges} \right)\left( D_{E_g T}\, F_{ges} \right)^H \right]^{-1}.$$

It should be noted, however, that a direct use of the interpolation matrices $C_{-1}$ and $C_1$ demands for high computer capacities. Therefore, it is preferred to approximate these matrices $C_{-1}$ and $C_1$ by their respective main and secondary diagonals.

If the output signals after echo compensation and/or other processing for noise reduction, dereverberation , etc., for the sub-bands that are not excised is denoted by $\hat{s}_\mu(n)$, where $\mu$ is the sub-band index, one obtains for all sub-bands (including the reconstruction of the previously excised sub-band vectors):

$$\widetilde{s}_\mu(n) = \begin{cases} \sum_{k=-1}^{1} \hat{s}_{\mu-1}(n-k)C_k(\mu,\mu) + \sum_{k=-1}^{1} \hat{s}_{\mu+1}(n-k)C_k(\mu,\mu+1), \text{ if } \mathrm{mod}(\mu,2) = 1 \\ \hat{s}_\mu(n-1), \text{ else} \end{cases}$$

where $C_k(n_1, n_2)$ denotes the element in the $n_1^{th}$ row and the $n_2^{th}$ column of the matrix $\mathbf{C}_k$. This implies that even sub-bands are taken with a delay of one time increment (n-1).

It should be noted that reconstruction of a previously excised sub-band signal can be based on more than one preceding and subsequent sub-band signal (n-1 and n+2). In particular, a different number of preceding and subsequent sub-band signals may be used for the interpolation ($\mathbf{C}_0 \neq \mathbf{0}$).

Synthesization of the thus obtained enhanced microphone sub-band signals in step 6 of Figure 1 is performed by means of a synthesis filter bank $\mathbf{g}_{\mu,syn} = \llcorner g_{\mu,0,syn},\cdots,g_{\mu,Ns_{yn}-1.syn} \lrcorner^T$ comprising, e.g., Hann windows, and also up-sampling the previously down-sampled sub-band signals again (by the same factor r above that was used for the down-sampling).

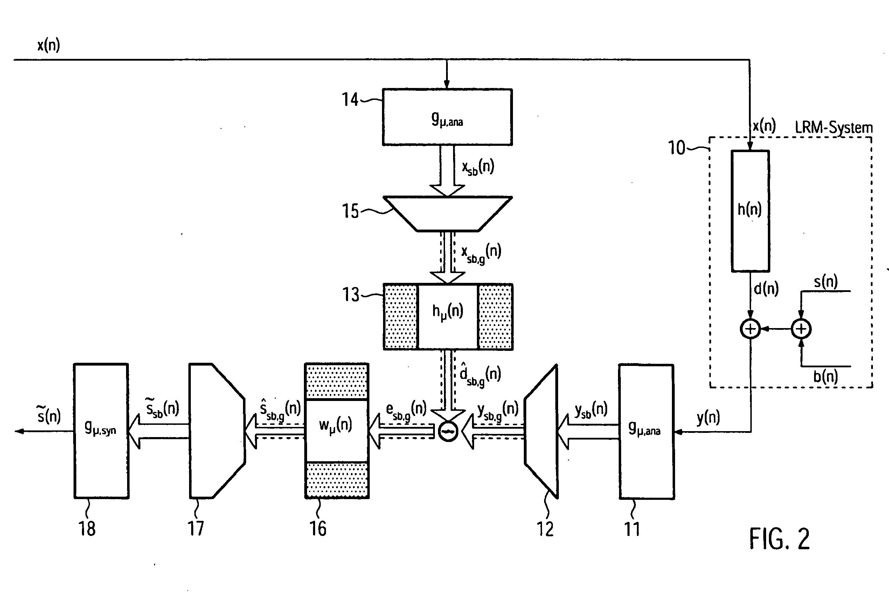

Figure 2 shows an example of a realization of the herein disclosed method for signal processing. Consider a telephone conversation between a remote party and a near party that makes use of a hands-free set comprising a loudspeaker and a microphone. A signal from the remote party x(n) (reference signal) is received on the near side. The communication room of the near speaker, e.g., a vehicular compartment, represents a loudspeaker-room-microphone (LRM) system characterized by an impulse response h(n). The microphone of the LRM system is intended to detect a speech signal s(n) of the near side speaker. However, the microphone also detects background noise b(n) and an echo contribution d(n) caused by the loudspeaker output. The microphone signal generated by the microphone is thus given by y(n)= s(n) + b(n) + d(n).

The signal processing for quality enhancement in the present invention is performed in the sub-band regime. Thus, the microphone signal y(n) is filtered by an analysis filter bank $\mathbf{g}_{\mu,ana}$ 11 (s. above) in order to obtain microphone sub-band signals $y_{sb}(n)$. A particular number of sub-band signals is excised by a filtering means 12, e.g., each second sub-band signal, more particularly, sub-band signals of odd sub-bands. The resulting set of remaining sub-band signals of even sub-bands $y_{sb, g}$ (even index of the sub-bands) is subject to filtering for enhancing the signal quality. For example, noise reduction by means of a Wiener filter might be performed.

In the example shown in Figure 2, the microphone sub-band signals of even sub-bands $y_{sb, g}$ (n) are filtered by an echo compensation filter

$$\hat{\mathbf{h}}_\mu(n) = \left[\hat{h}_{\mu,0}(n), \hat{h}_{\mu,1}(n),\dots\hat{h}_{\mu,N-1}(n)\right]^T$$

of length N (number of filter coefficients for each sub-band $\mu$) for modeling the impulse response of the LRM. For the echo compensation filter that shall estimate the impulse response, in principle, an infinite impulse response filter (IIR) or an adaptable finite impulse response filter (FIR) as known in the art may be used. For stability reasons an FIR filter is preferred. Given a typical sampling frequency of a speech signal some 256/r to some 1000/r filter coefficient are to be employed (with r denoting the factor of down-sampling of the sub-band signals).

In general, typical adaptation methods are iterative methods, i.e., in full band

$$\hat{\mathbf{h}}(n+1) = \hat{\mathbf{h}}(n) + \Delta\hat{\mathbf{h}}(n), \text{ e.g.,}$$

the normalized least mean square (NLMS) algorithm

$$\hat{\mathbf{h}}(n+1) = \hat{\mathbf{h}}(n) + \kappa(n)\frac{\mathbf{x}(n)\,e(n)}{\|\mathbf{x}(n)\|^2}$$

with the vector of the reference signal $\mathbf{x}(n) = [x(n),\ x(n-1),...,x(n-N+1)]^T$ and the error signal $e(n)$ representing the difference of the microphone signal and the output of the echo compensation filter 13

$$e(n) = y(n) - \hat{d}(n) = y(n) - \hat{\mathbf{h}}^T(n)\mathbf{x}(n).$$

The corrector step is adjusted by means of the real number $\kappa$.

Accordingly, in the sub-band regime the normalized least mean square (NLMS) algorithm reads

$$\hat{\mathbf{h}}_{sb}(n+1) = \hat{\mathbf{h}}_{sb}(n) + \kappa_{sb}(n)\frac{\mathbf{x}_{sb}(n)\,e_{sb}^{*}(n)}{\|\mathbf{x}_{sb}(n)\|^2}$$

(where the asterisk denotes the complex conjugate and $\kappa_{sb}(n)$ adjusts the corrector step) with the vector of the reference signal

$$\mathbf{x}_{sb}(n) = \left[x_{sb}(n), x_{sb}(n-1),...,x_{sb}(n-N+1)\right]^T$$

and

$$e_{sb}(n) = y_{sb}(n) - \hat{d}_{sb}(n) = y_{sb}(n) - \hat{\mathbf{h}}_{sb}^{H}(n)\mathbf{x}_{sb}(n)$$

where the upper index H denotes the Hermitian adjugate.

Since the filtering means 12 only outputs signals for even sub-bands, the echo compensation filter 13 also has only to operate for such sub-bands. Therefore, the reference signal $x(n)$ is input in an analysis filter bank 14 similar to the analysis filter bank $\mathbf{g}_{\mu,ana}$ 11 used for dividing the microphone signal $y(n)$ into sub-bands. From the resulting reference sub-band signals $x_{sb}(n)$ odd ones are excised as in the case of the microphone sub-band signals. Thus, the echo compensation filter 13 only receives even reference sub-band signals that are output by the filtering means 15 used to excise the other reference sub-band signals. For even sub-bands only error signals $e_{sb,g}(n)$ are obtained that represent echo compensated microphone sub-band signals.

It should be noted that both the microphone sub-band signals and the reference signal sub-band signals are down-sampled by a factor r. For example, the spectra of the down-sampled reference sub-band signals are given by

$$X_{\mu}(e^{j\Omega}) = \sum_{m=0}^{r-1} X\left(e^{j\left[\frac{\Omega}{r} - \frac{2\pi}{r}\right]m}\right) G_{\mu,ana}\left(e^{j\left[\frac{\Omega}{r} - \frac{2\pi}{r}m\right]}\right)$$

for each sub-band $\mu$.

The higher the rate r is chosen, the more the computational load is reduced. However, due to the finite-slope filter flanks, r = M is an upper limit for the sampling rate r (where M is the number of sub-bands, i.e. number of channels of the analysis filter banks 11 and 14).

In the example shown in Figure 2, the error signals $e_{sb,g}(n)$ are further processed for noise reduction and reduction of residual echoes due to imperfect adaptation of the echo compensation filter 13 by a post-filtering means 16, e.g., a Wiener filter. The filter characteristics of the Wiener filter is adapted on the basis of the estimated auto power density of the error signals $e_{sb,g}(n)$ and the perturbation that is still present in the error signals $e_{sb,g}(n)$, i.e. the echo compensated microphone sub-band signals, in form of background noise and residual echoes (for details see, e.g., E. Hänsler and G. Schmidt, "Acoustic Echo and Noise Control - A Practical Approach", John Wiley & Sons, New York, 2004).

The enhanced sub-band signals $\hat{s}_{sb,g}(n)$ are transferred from the post-filtering means 16 to a processing means 17 for reconstructing sub-band signals for the previously excised odd sub-bands. Reconstruction can be done as described above with reference to the flow chart of Figure 1. The complete set of sub-band signals $\tilde{s}_{sb}(n)$ is input in a synthesis filter bank 18 corresponding to the analysis filter bank $g_{\mu,ana}$ 14 used for the division of the microphone signal $y(n)$ into the microphone sub-band signals $y_{sb}(n)$. Eventually, a full-band enhanced microphone signal $\tilde{s}(n)$ is obtained.

For a typical application including M = 256 sub-bands and down-sampling rates of r = 64 and r = 72, for example, according to the method of the present invention as described above both the computational time and memory demand can be reduced by about 50 % as compared to standard DFT processing. The time for signal processing (delay time) is only a few milliseconds above the time delay of standard processing by means of polyphase filter banks and, in particular, below the threshold according to the GSM standards of 39 ms in vehicular cabins. Moreover, the adaptation velocity of the echo compensation filter 13 is only slightly different from the one in methods known in the art.

All previously discussed embodiments are not intended as limitations but serve as examples illustrating features and advantages of the invention. It is to be understood that some or all of the above described features can also be combined in different ways.

## Claims

1. Method for enhancing the quality of a microphone signal, comprising
dividing a microphone signal ($y(n)$) into microphone sub-band signals ($y_{sb}(n)$);
excising a predetermined number of the microphone sub-band signals ($y_{sb}(n)$) for predetermined sub-bands wherein the predetermined number of sub-bands consists of sub-bands with an odd index or an even index;
processing the remaining microphone sub-band signals ($y_{sb,g}(n)$) to obtain enhanced microphone sub-band signals ($\hat{s}_{sb,g}(n)$); and
reconstructing microphone sub-band signals for the predetermined sub-bands for which microphone sub-band signals were excised, wherein each of the excised microphone sub-band signals is reconstructed by means of enhanced microphone sub-band signals ($\hat{s}_{sb,g}(n)$) obtained by processing the remaining microphone sub-band signals ($y_{sb,g}(n)$).

2. Method according to claim 1, wherein the processing of the remaining microphone sub-band signals ($y_{sb,g}(n)$) to obtain the enhanced microphone sub-band signals ($\hat{s}_{sb,g}(n)$) comprises echo compensating and/or noise reduction of the remaining microphone sub-band signals ($y_{sb,g}(n)$).

3. Method according to claim 1 or 2, wherein the remaining microphone sub-band signals ($y_{sb,g}(n)$) are echo compensated by steps comprising
dividing a reference signal ($x(n)$) into reference sub-band signals ($x_{sb}(n)$);
excising a predetermined number of the reference sub-band signals ($x_{sb}(n)$) that is equal to the predetermined number of excised microphone sub-band signals for the same predetermined sub-bands;
adapting filter coefficients of an echo compensating filtering means based on the remaining reference sub-band signals ($x_{sb,g}(n)$); and
filtering the remaining microphone sub-band signals ($y_{sb,g}(n)$) by means of the adapted filter coefficients.

4. Method according to one of the preceding claims, wherein the predetermined number of sub-bands consists of sub-bands above or below some predetermined frequency.

5. Method according to one of the preceding claims, wherein the microphone sub-band signals ($y_{sb}(n)$) and the reference sub-band signals ($x_{sb,g}(n)$) are down-sampled with respect to the microphone signal ($y(n)$) and the reference signal ($x(n)$), respectively, by the same down-sampling factor ($r$).

6. Method according to one of the preceding claims, wherein at least at one time the microphone sub-band signals for the predetermined sub-bands for which microphone sub-band signals were excised are reconstructed for the predetermined sub-bands by averaging the remaining microphone sub-band signals that are adjacent in time.

7. Method according to one of the preceding claims, wherein microphone sub-band signals for the predetermined sub-bands for which microphone sub-band signals were excised are reconstructed at a particular time (n) by interpolation of remaining microphone sub-band signals at the particular time (n) and remaining microphone sub-band signals that are adjacent in time.

8. Method according to claim 7, wherein the interpolation is performed by interpolation matrices and wherein the interpolation matrices are approximated by their main diagonals and secondary diagonals, respectively.

9. Computer program product, comprising one or more computer readable media having computer-executable instructions adapted to perform the steps of the method according to one of the claims 1 - 8.

10. Signal processing means for enhancing the quality of a microphone signal, comprising
at least one microphone configured to obtain at least one microphone signal (y(n));
an analysis filter bank (11) configured to divide the at least one microphone signal (y(n)) into microphone sub-band signals ($y_{sb}(n)$);
a first filtering means (12) configured to excise a predetermined number of the microphone sub-band signals ($y_{sb}(n)$) for predetermined sub-bands wherein the predetermined number of sub-bands consists of sub-bands with an odd index or an even index;
a second filtering means (13) configured to process the remaining microphone sub-band signals ($y_{sb,g}(n)$) to obtain enhanced microphone sub-band signals ($\hat{s}_{sb,g}(n)$);
a processing means (17) configured to reconstruct microphone sub-band signals for the predetermined sub-bands for which microphone sub-band signals were excised by means of enhanced microphone sub-band signals ($\hat{s}_{sb,g}(n)$) obtained by processing the remaining microphone sub-band signals ($y_{sb,g}(n)$); and
a synthesis filter bank (18) configured to synthesize the reconstructed and enhanced microphone sub-band signals ($\hat{s}_{sb}(n)$) obtained from the remaining microphone sub-band signals ($y_{sb,g}(n)$) to obtain an enhanced microphone signal ($\tilde{s}(n)$).

11. The signal processing means according to claim 10, wherein the second filtering means (13) is an echo compensation filtering means; and further comprising
an analysis bank (14) configured to divide a reference signal into reference sub-band signals ($x_{sb}(n)$);
a third filtering means (15) configured to excise a predetermined number of the reference sub-band signals ($x_{sb}(n)$) that is equal to the predetermined number of excised microphone sub-band signals for the same predetermined sub-bands; and wherein
the echo compensation filtering means is configured to be adapted based on the remaining reference sub-band signals ($x_{sb,g}(n)$) and to filter the remaining microphone sub-band signals ($y_{sb,g}(n)$) by means of adapted filter coefficients.

12. The signal processing means according to claim 10 or 11, wherein the processing means (17) is configured to reconstruct microphone sub-band signals for the predetermined sub-bands for which microphone sub-band signals were excised at a particular time (n) by interpolation of remaining microphone sub-band signals at the particular time (n) and remaining microphone sub-band signals that are adjacent in time.

13. The signal processing means according to one of the claims 10 - 12, further comprising a post-filtering means (16) configured to filter the enhanced microphone sub-band signals ($\hat{s}_{sb,g}(n)$) in order to reduce background noise and/or residual echoes.

14. Hands-free telephone set or speech recognition means comprising a signal processing means according to one of the claims 10 - 13.

**Patentansprüche**

1. Verfahren zum Verbessern der Qualität eines Mikrofonsignals, umfassend
Teilen eines Mikrofonsignals (y(n)) in Mikrofon - Teilbandsignale $y_{sb}(n)$;
Löschen einer vorbestimmten Anzahl an Mikrofon - Teilbandsignalen $y_{sb}(n)$ in vorbestimmten Teilbändern, wobei die vorbestimmte Anzahl an Teilbändern aus Teilbändern mit einem ungeraden oder einem geraden Index besteht; Verarbeiten der verbleibenden Mikrofon - Teilbandsignale ($y_{sb,g}(n)$), um verbesserte Mikrofon - Teilbandsignale ($\hat{s}_{sb,g}(n)$) zu erhalten; und

Rekonstruieren von Mikrofon - Teilbandsignalen für die vorbestimmten Teilbänder, in denen Mikrofon - Teilbandsignale gelöscht wurden, wobei jedes der gelöschten Mikrofon - Teilbandsignale mithilfe der verbesserten Mikrofon - Teilbandsignale ($\hat{s}_{sb,g}(n)$), die durch das Verarbeiten der verbleibenden Mikrofon - Teilbandsignale ($y_{sb,g}(n)$) erhalten werden, rekonstruiert wird.

**2.** Verfahren gemäß Anspruch 1, in dem das Verarbeiten der verbleibenden Mikrofon - Teilbandsignale ($y_{sb,g}(n)$), um die verbesserten Mikrofon - Teilbandsignale ($\hat{s}_{sb,g}(n)$) zu erhalten, Echokompensieren und/oder Geräuschreduzieren der verbleibenden Mikrofon - Teilbandsignale ($y_{sb,g}(n)$) umfasst.

**3.** Verfahren gemäß Anspruch 1 oder 2, in dem die verbleibenden Mikrofon - Teilbandsignale ($y_{sb,g}(n)$) durch Schritte echokompensiert werden, die umfassen

Teilen eines Referenzsignals ($x(n)$) in Referenz - Teilbandsignale ($x_{sb}(n)$);
Löschen einer vorbestimmten Anzahl der Referenz - Teilbandsignalen ($x_{sb}(n)$), die der vorbestimmten Anzahl an gelöschten Mikrofon - Teilbandsignalen für dieselben vorbestimmten Teilbänder gleich ist;
Einstellen von Filterkoeffizienten einer Echokompensations - Filtereinrichtung auf der Grundlage der verbleibenden Referenz - Teilbandsignale ($x_{sb,g}(n)$); und
Filtern der verbleibenden Mikrofon - Teilbandsignale ($y_{sb,g}(n)$) mithilfe der eingestellten Filterkoeffizienten.

**4.** Verfahren gemäß einem der vorhergehenden Ansprüche, in dem die vorbestimmte Anzahl an Teilbandsignalen aus Teilbändern oberhalb oder unterhalb einer vorbestimmten Frequenz besteht.

**5.** Verfahren gemäß einem der vorhergehenden Ansprüche, in dem die Mikrofon - Teilbandsignale ($y_{sb}(n)$) und die Referenz - Teilbandsignale ($x_{sb}(n)$) hinsichtlich des Mikrofonsignals($y(n)$) bzw. des Referenzsignals ($x(n)$) mit demselben Unterabtastungsfaktor ($r$) unterabgetastet werden.

**6.** Verfahren gemäß einem der vorhergehenden Ansprüche, in dem zumindest zu einer Zeit die Mikrofon - Teilbandsignale für die vorbestimmten Teilbänder, in denen Mikrofon - Teilbandsignale gelöscht wurden, für die vorbestimmten Teilbänder durch Mittelung der verbleibenden Mikrofon - Teilbandsignale, die in der Zeit benachbart zueinander sind, rekonstruiert werden.

**7.** Verfahren gemäß einem der vorhergehenden Ansprüche, in dem die Mikrofon - Teilbandsignale für die vorbestimmten Teilbänder, in denen Mikrofon - Teilbandsignale gelöscht wurden, zu einer bestimmten Zeit ($n$) durch Interpolation der verbleibenden Mikrofon - Teilbandsignale zu der bestimmten Zeit ($n$) und verbleibender Mikrofon - Teilbandsignale, die in der Zeit benachbart sind, rekonstruiert werden.

**8.** Verfahren gemäß Anspruch 7, in dem die Interpolation mit Interpolationsmatrizes ausgeführt wird und in dem die Interpolationsmatrizes durch ihre Hauptdiagonalen bzw. Nebendiagonalen approximiert werden.

**9.** Computerprogrammprodukt, das ein oder mehrere computerlesbare Medien umfasst, die computerausführbare Anweisungen aufweisen, die dazu ausgebildet sind, die Schritte des Verfahrens gemäß einem der Ansprüche 1 - 8 auszuführen.

**10.** Signalverarbeitungsvorrichtung zum Verbessern der Qualität eines Mikrofonsignals, die umfasst

zumindest ein Mikrofon, das dazu ausgebildet ist, zumindest ein Mikrofonsignal ($y(n)$) zu erhalten;
eine Analysfilterbank (11), die dazu ausgebildet ist, das zumindest eine Mikrofonsignal ($y(n)$) in Mikrofon - Teilbandsignale $y_{sb}(n)$ zu teilen;
eine erste Filtereinrichtung (12), die dazu ausgebildet ist, eine vorbestimmte Anzahl an Mikrofon - Teilbandsignalen $y_{sb}(n)$ für vorbestimmte Teilbänder zu löschen, wobei die vorbestimmte Anzahl an Teilbändern aus Teilbändern mit einem ungeraden oder einem geraden Index besteht;
eine zweite Filtereinrichtung (13), die dazu ausgebildet ist, die verbleibenden Mikrofon - Teilbandsignale ($y_{sb,g}(n)$) zu verarbeiten, um verbesserte Mikrofon - Teilbandsignale ($\hat{s}_{sb,g}(n)$) zu erhalten;
eine Verarbeitungseinrichtung (17), die dazu ausgebildet ist, Mikrofon - Teilbandsignale für die vorbestimmten Teilbänder, in denen Mikrofon - Teilbandsignale gelöscht wurden, mithilfe verbesserter Mikrofon - Teilbandsignale ($\hat{s}_{sb,g}(n)$), die durch Verarbeiten der verbleibenden Mikrofon - Teilbandsignale ($y_{sb,g}(n)$) erhalten werden, zu rekonstruieren; und

eine Synthesefilterbank (18), die dazu ausgebildet ist, die rekonstruierten und verbesserten Mikrofon - Teilbandsignale ($\hat{s}_{sb,g}(n)$), die aus den verbleibenden Mikrofon - Teilbandsignalen ($y_{sb,g}(n)$) erhalten werden, zu synthetisieren, um ein verbessertes Mikrofonsignal ($\tilde{s}(n)$) zu erhalten.

**11.** Die Signalverarbeitungsvorrichtung gemäß Anspruch 10, in der die zweite Filtereinrichtung (13) eine Echokompensations - Filtereinrichtung ist; und die weiterhin umfasst

eine Analysebank (14), die dazu ausgebildet ist, ein Referenzsignal in Referenz - Teilbandsignale ($x_{sb}(n)$) zu teilen;

eine dritte Filtereinrichtung (15), die dazu ausgebildet ist, eine vorbestimmte Anzahl der Referenz - Teilbandsignale ($x_{sb}(n)$), die der vorbestimmten Anzahl an gelöschten Mikrofon - Teilbandsignalen für dieselben vorbestimmten Teilbänder gleich ist, zu löschen; und in der

die Echokompensations - Filtereinrichtung dazu ausgebildet ist, auf der Grundlage der verbleibenden Referenz - Teilbandsignale ($x_{sb,g}(n)$) eingestellt zu werden und die verbleibenden Mikrofon - Teilbandsignale ($y_{sb,g}(n)$) mithilfe der eingestellten Filterkoeffizienten zu filtern.

**12.** Die Signalverarbeitungsvorrichtung gemäß Anspruch 10 oder 11, in der die Verarbeitungseinrichtung (17) dazu ausgebildet ist, Mikrofon - Teilbandsignale für die vorbestimmten Teilbänder, in denen Mikrofon - Teilbandsignale gelöscht wurden, zu einer bestimmten Zeit (n) durch Interpolation der verbleibenden Mikrofon - Teilbandsignale zu der bestimmten Zeit (n) und verbleibender Mikrofon - Teilbandsignale, die in der Zeit benachbart sind, zu rekonstruieren.

**13.** Die Signalverarbeitungsvorrichtung gemäß einem der Ansprüche 10 - 12, die weiterhin eine Nachfiltereinrichtung (16) umfasst, die dazu ausgebildet ist, die verbesserten Mikrofon - Teilbandsignale ($\hat{s}_{sb,g}(n)$) zu filtern, um Hintergrundgeräusch und/oder ein verbleibendes Echo zu verringern.

**14.** Freihandtelefonvorrichtung oder Spracherkennungsvorrichtung, die eine Signalverarbeitungsvorrichtung gemäß einem der Ansprüche 10 - 13 umfasst.

**Revendications**

**1.** Procédé permettant d'améliorer la qualité d'un signal fourni par un microphone, comprenant

la division du signal par microphone ($y(n)$) en des signaux de sous bandes par microphone ($y_{sb}(n)$),

la suppression d'un nombre prédéfini des signaux de sous bandes par microphone ($y_{sb}(n)$) pour des sous bandes prédéterminées, le nombre prédéfini de sous bandes étant constitué de sous bandes présentant un indice impair ou un indice pair,

le traitement des signaux restants de sous bandes par microphone ($y_{sb,g}(n)$) afin d'obtenir des signaux améliorés de sous bandes par microphone ($s_{sb,g}(n)$), et

la reconstitution de signaux de sous bandes par microphone pour les sous bandes prédéterminées pour lesquelles ont été supprimés les signaux de sous bandes par microphone, chacun des signaux de sous bande par microphone supprimé étant reconstitué au moyen de signaux améliorés de sous bandes par microphone ($s_{sb,g}(n)$) obtenus par le traitement des signaux restants de sous bandes par microphone ($y_{sb,g}(n)$).

**2.** Procédé selon la revendication 1, dans lequel le traitement des signaux restants de sous bandes par microphone ($y_{sb,g}(n)$) pour obtenir des signaux améliorés de sous bandes par microphone ($s_{sb,g}(n)$) comprend une compensation d'écho et/ou une réduction de bruit des signaux restants de sous bandes par microphone ($y_{sb,g}(n)$).

**3.** Procédé selon la revendication 1 ou 2, dans lequel les signaux restants de sous bandes par microphone ($y_{sb,g}(n)$) sont compensés pour l'écho grâce à des étapes comprenant

la division d'un signal de référence ($x(n)$) en des signaux de sous bandes de référence ($x_{sb}(n)$)

la suppression d'un nombre prédéfini des signaux de sous bandes de référence ($x_{sb}(n)$) qui est égal au nombre prédéterminé de signaux supprimés de sous bandes par microphone pour les mêmes sous bandes prédéterminées,

l'adaptation de coefficients de filtres d'un moyen de filtrage par compensation d'écho fondé sur les signaux restants de sous bandes de référence ($x_{sb,g}(n)$), et

le filtrage des signaux restants de sous bandes par microphone ($y_{sb,g}(n)$) au moyen des coefficients adaptés de filtres.

**4.** Procédé selon l'une des revendications précédentes, dans lequel le nombre prédéfini de sous bandes est constitué de sous bandes au-dessus ou en dessous d'une certaine fréquence prédéterminée.

**5.** Procédé selon l'une des revendications précédentes, dans lequel les signaux de sous bandes par microphone ($y_{sb}$(n)) et les signaux de sous bandes de référence ($x_{sb,g}$(n)) sont respectivement sous-échantillonnés par rapport au signal par microphone (y(n)) et au signal de référence (x(n)) par le même facteur (r) de sous-échantillonnage.

**6.** Procédé selon l'une des revendications précédentes, dans lequel, au moins à un instant, les signaux de sous bandes par microphone pour les sous bandes prédéterminées pour lesquelles des signaux de sous bandes par microphone ont été supprimés, sont reconstitués pour les sous bandes prédéterminées en calculant la moyenne des signaux restants de sous bandes par microphone contigus dans le temps.

**7.** Procédé selon l'une des revendications précédentes, dans lequel des signaux de sous bandes par microphone pour les sous bandes prédéterminées pour lesquelles des signaux de sous bandes par microphone ont été supprimés sont reconstitués à un instant particulier (n) grâce à l'interpolation de signaux restants de sous bandes par microphone à l'instant particulier (n) et de signaux restants de sous bandes par microphone qui sont contigus dans le temps

**8.** Procédé selon la revendication 7, dans lequel l'interpolation est effectuée grâce à des matrices d'interpolation et dans lequel les matrices d'interpolation font respectivement l'objet d'une approximation par leurs diagonales principales et leurs diagonales secondaires.

**9.** Programme informatique, comprenant un ou plusieurs supports pouvant être lus par ordinateur comportant des instructions exécutables par ordinateur conçues pour effectuer les étapes du procédé conformes à l'une des revendications 1 à 8.

**10.** Système de traitement du signal permettant d'améliorer la qualité d'un signal fourni par un microphone comprenant au moins un microphone configuré pour récupérer le ou les signaux par microphone (y (n)), un groupe de filtres d'analyse (11) configuré pour diviser le ou les signaux par microphone (y(n)) en des signaux de sous bandes par microphone ($y_{sb}$(n)),
un premier moyen de filtrage (12) configuré pour supprimer un nombre prédéfini de signaux de sous bandes par microphone ($y_{sb}$(n)) pour des sous bandes prédéterminées, le nombre prédéfini de sous bandes étant constitué de sous bandes présentant un indice impair ou un indice pair,
un second moyen de filtrage (13) configuré pour traiter les signaux restants de sous bandes par microphone ($y_{sb,g}$(n)) afin d'obtenir des signaux améliorés de sous bandes par microphone ($s_{sb,g}$(n)),
un moyen de traitement (17) configuré pour reconstituer des signaux de sous bandes par microphone pour les sous bandes prédéterminées pour lesquelles ont été supprimés des signaux de sous bandes par microphone au moyen de signaux améliorés de sous bandes par microphone ($s_{sb,g}$(n)) obtenus par le traitement des signaux restants de sous bandes par microphone ($y_{sb,g}$(n)), et
un groupe de filtres de synthèse (18) configuré pour synthétiser les signaux reconstitués et améliorés de sous bandes par microphone ($s_{sb}$(n)) obtenus à partir des signaux restants de sous bandes par microphone ($y_{sb,g}$(n)) afin d'obtenir un signal amélioré par microphone (s(n))

**11.** Moyen de traitement du signal selon la revendication 10, dans lequel le second moyen de filtrage (13) est un moyen de filtrage par compensation d'écho, et il comprend en outre
un groupe d'analyse (14) configuré pour diviser un signal de référence en des signaux de sous bandes de référence ($x_{sb}$(n)),
un troisième moyen de filtrage (15) configuré pour supprimer un nombre prédéfini des signaux de sous bandes de référence ($x_{sb}$(n)) qui est égal au nombre prédéfini des signaux supprimés de sous bandes par microphone pour les mêmes sous bandes prédéterminées, et dans lequel
le moyen de filtrage par compensation d'écho est configuré pour être adapté sur la base des signaux restants de sous bandes de référence ($x_{sb,g}$(n)) et pour filtrer les signaux restants de sous bandes par microphone ($y_{sb,g}$(n)) au moyen de coefficients de filtres adaptés.

**12.** Moyen de traitement du signal selon la revendication 10 ou 11, dans lequel le moyen de traitement (17) est configuré pour reconstituer des signaux de sous bandes par microphone pour les sous bandes prédéterminées pour lesquelles les signaux de sous bandes par microphone ont été supprimés à un instant particulier (n) grâce à l'interpolation de signaux restants de sous bandes par microphone à l'instant particulier (n) et de signaux restants de sous bandes par microphone qui sont contigus dans le temps.

**13.** Moyen de traitement du signal selon l'une des revendications 10 à 12, comprenant en outre un moyen de post-filtrage (16) configuré pour filtrer les signaux améliorés de sous bandes par microphone ($s_{sb,g}$(n)) afin de réduire le bruit de fond et/ou les échos résiduels.

14. Combiné téléphonique mains libres ou moyen de reconnaissance de la parole comprenant un moyen de traitement du signal conforme à l'une des revendications 10 à 13.

detect verbal utterance and
generate microphone signal — 1

obtain microphone
sub-band signals — 2

excise predetermined number of
microphone sub-band signals — 3

echo compensate remaining
microphone sub-band signals — 4

reconstruct excised signals
based on echo compensated
sub-band signals — 5

synthesize sub-band signals
obtain enhanced
microphone signal — 6

FIG. 1

FIG. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2426167 A

**Non-patent literature cited in the description**

- **E. Hänsler ; G. t.** Acoustic Echo and Noise Control - A Practical Approach. John Wiley & Sons, 2004
- **Steven L. Gay et al.** Fast converging subband acoustic echo cancellation using RAP on the WE® DSP16A. *ICASSP, International Conference on Acoustics, Speech and Signal Processing,* 03 April 1990, 1141-1144
- Acoustic echo cancellation with post-filtering in sub-band. **Lu Xiaojian et al.** Workshop on Applications of Signal Processing to Audio and Acoustics. IEEE, 19 October 2003, 29-32
- **E. HÄNSLER ; G. SCHMIDT.** Acoustic Echo and Noise Control - A Practical Approach. John Wiley & Sons, 2004
- **E. HÄNSLER ; G. SCHMIDT.** Acoustic Echo and Noise Control - A Practical Approach. John Wiley & Sons, 1994